# EUROPEAN PATENT APPLICATION

(11) **EP 2 157 733 A1**
(43) Date of publication of application: **24.02.2010**
(21) Application number: 08460036.0
(22) Date of filing: 22.08.2008
(51) Int. Cl.: H04L 12/24

(54) **A method and device for data transmission between a wireless sensor network and a data collection system**

(71) Applicant: ABB Research LTD, 8050 Zürich (CH)
(72) Inventor: Budyn, Marek, 30-072 Krakow (PL)
(74) Representative: Chochorowska-Winiarska, Krystyna

(57) **Abstract**

The invention deals with a method and a device for transmitting data between a wireless sensor network and a data collection system, in which the data collection system is a monitoring and/or diagnosing system or another data receiver, using these data especially for controlling various technological processes or facilities. The invention is **characterised in that** signals from individual wireless sensors (S1-Sn, T1-Tn) are sent to a computer-based data collection system (7) by means of a data transmission device (6) in which at least one communications channel (U) is dynamically generated for bi-directional transfer of information between a signal or signals delivered from the wireless sensor network (1, 2) and signals originating in the data collection system (7).

## Description

The invention deals with a method and a device for data transmission between a wireless sensor network and a data collection system in which the data collection system is a monitoring and/or diagnosing system or another data receiver using those data especially in the processes of controlling various technological processes or facilities.

In systems that monitor and/or diagnose technical facilities, which represent various types of machinery and equipment as well as data storage systems storing data relating to the operational status of technical facilities and industrial processes, the key part is played by sensors which make the actual measurements of specific physical values characterising the examined technical facilities or processes. The sensors are installed on the examined facilities or near them and they are normally connected by an electric wire or an optical fibre conduit to devices which convert the measured analogue signal to a digital signal. The converted signals are then transmitted to data collection systems, normally in the form of diagnosing or monitoring systems or systems for storing data useful in diagnosing and monitoring. The sensors together with the data conversion devices form a measuring system or systems, and data from those sensors are supplied to the diagnosing or monitoring systems or to systems for storing measurement data. Measuring systems contain a definite, constant number of sensors, and the number of measured signals is defined beforehand as constant and invariable. Sensors are usually installed on technical facilities and they transfer physical data relating to these facilities or to technical processes taking place in these facilities. Sensors can be both wire-type, i.e. connected with data converting and/or collecting devices, and wireless type, in which the measured signals are transmitted by radio to the data collecting, storing and analysing devices. Wireless sensors can be provided with precise electronic measuring devices and/or devices for processing the measured data. Wireless sensors can be installed in measuring locations which are not easily accessible, where sensors with connecting wires cannot be placed. Such poorly accessible locations are often places with high temperatures, places near strong electric and magnetic fields, etc. In such difficult places of operation, sensors are exposed to the risk of frequent damage and thus may cause interference in the reception of data transmitted for monitoring or diagnosing. The assurance of continuous and reliable operation of such systems requires the assurance of proper communication between the sensor network and the devices that collect data from these sensors. Normally, communication with a network of wireless sensors is implemented as a connection with a so called base station which translates the protocol and data originating in wireless sensors into data available for the computer device by means of a serial connection, normally RS232 and/or a network connection such as e.g. Ethernet. The measurement data are normally made available in the form of measured physical values additionally marked by the ID of the sensor which has measured the specific data. This information is indispensable as networks normally consist of a large number of similar or even identical sensors differing only in their internal ID. So marked data land in the monitoring, diagnosing or data storage system or other data recipient, and based on the sensor IDs - established at the moment of installation and commissioning of such system - they are linked with specific parameters of the monitored piece of equipment. Failure frequency, battery power supply and low reliability of wireless sensor networks causes that the measured signals may appear and disappear with time. As a result, it becomes necessary to reconfigure the monitoring systems with each replacement of a sensor, which requires the user's intervention and additional time for completing such reconfiguration.

The essential quality of the inventive method of data transmission between at least one wireless sensor network and at least one computer-based data collection system, in which signals from individual wireless sensors are sent to the computer-based data collection system, is that the signals from individual wireless sensors are sent to a computer-based data collection system by means of a data transmission device in which at least one communication channel is dynamically generated for bi-directonal transfer of information between signals supplied from the wireless sensor network and signals originating in the data collection system.

Preferably, the communications channel is generated by creating a list of links containing interconnected elements of the list of signals available for the data collection system and the elements of the list of subscription signals.

Preferably, the list of signals available for the data collecting system is generated in two stages, first by creating a list of input signals from the supplied signals originating in the wireless sensors, which list is then mapped to the list of signals available for the collection system through a mapping table in which the key to finding the right signal available for the data collection system is the sensor ID and/or the input signal ID.

Preferably, the list of subscription signals is generated from signals originating in the data collection system, which are expressed in the form of client's requests.

Preferably, signals from individual wireless sensors are received first in the base stations and then the received signals are transmitted to the computer-based data collection system through a data transmission device.

Preferably, in the inventive method, the data transmission device communicates with the collection system through a communications module in the form of a network card, an RS232 port, Ethernet or other communications link.

Preferably, in the inventive method, the data transmission device communicates with the collection system through an OPC protocol.

The essential quality of the device for executing the inventive method is that it contains:
- a module for dynamically linking signals, in which a communications channel is generated for bi-directional transfer of information between signals supplied from the wireless sensor network and signals originating in the data collection system in the form of a list of links containing interconnected elements of the list of signals available for the data collection system and the elements of the list of subscription signals,
- a mapping module for generating the list of signals available for the data collection system,
- a subscription servicing module for generating the list of subscription signals,
- a sensor servicing module for generating the list of wireless sensor signals.

Preferably, the data transmission device forms an integral part with the data collection system.

The essential quality of the computer program for data transmission between at least one wireless sensor network and at least one computer-based data collection system, which is loadable to and executable in the data transmission device is that during execution it implements the inventive method.

The advantage of the inventive method and device is the introduction into the communications network of an intermediate element between the real source of data having the form of sensors and the receiver of the data having the form of a data collection system, which permits an undisturbed communication between the dynamically changing network of wireless sensors, transmitting a variable number and type of signals, and the data receiver requiring a constant number of specific signals.

The inventive method and device has been explained on the basis of an embodiment shown in the drawing in which fig. 1 shows a sensor network together with a data transmission and collection device depicted schematically, fig. 2 - a diagram of the data transmission device, fig. 3 - hypothetical tables of the lists of collection and exchange of transmitted signals, fig. 4 - an action network illustrating the data transmission method depicted generally, fig. 5 - an action network illustrating the method of data transmission from the sensor network to one of the collection systems, fig. 6 - an action network illustrating the method of data transmission from a hypothetical collection system to the sensor network, and fig. 7 - an action network illustrating the method of subscription of the hypothetical data collection system to the signal from the sensor network.

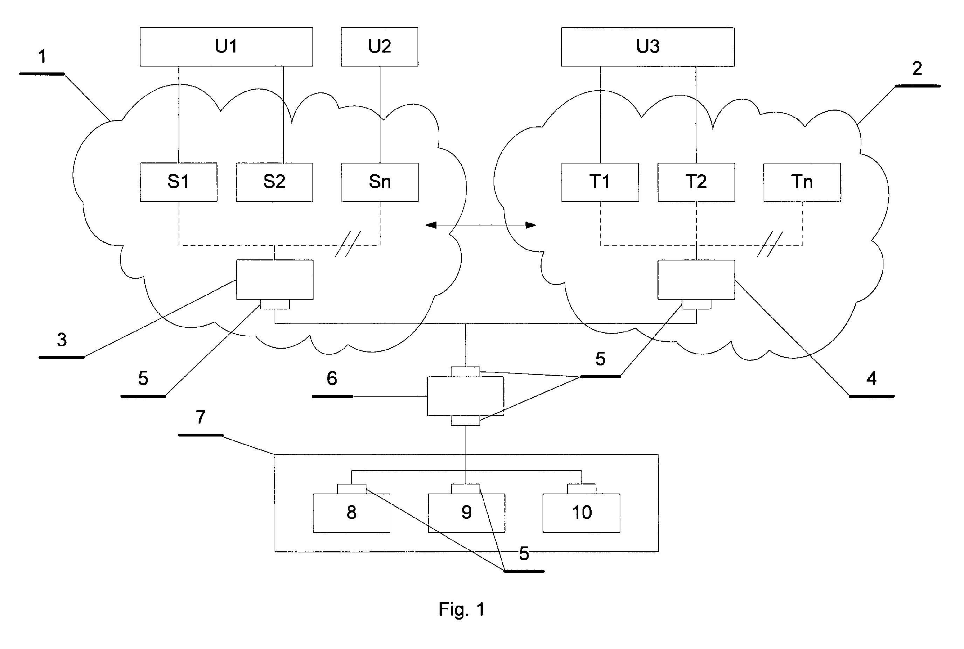

The inventive device is applicable in a hypothetical environment shown in fig. 1. Wireless networks 1 and 2, containing wireless sensors S1..Sn and T1..Tn respectively and base stations 3 and 4, can communicate through network connections of the type I/O port 5 with a data transmission device 6. The network connection 5 can be implemented, for example, by a network card, port RS232, Ethernet, etc. Wireless sensors are used to measure real physical values such as temperature, humidity level, vibrations, and to convert the measured values to digital data. For example, sensors S1,S2 measure temperatures in two points of a device U1, sensor Sn measures vibration level in a device U2, sensors T1 and T2, connected to a device U3 measure vibrations in 2 axes X and Y, and sensor Tn measures humidity level in the room housing the device U3, without being connected directly to it. Wireless networks 1 and 2 can also be interconnected to communicate with each other through any wireless connections, which is shown by an arrow in the drawing, an thus the sensors S1..Sn can communicate with both the base station 3 and 4. Similarly, the sensors T1..Tn can communicate with both the base station 4 and 3. The base stations 3, 4 enable communication between the wireless network and another I/O port 5, transforming data from that port to a radio form. The data transmission device 6 is connected through the I/O port-type network connection 5 with a data collection system 7, for example through the OPC protocol (OLE for Process Control), which is a monitoring system 8 and/or a diagnostics system 9 or with any other data receiver 10. The data collection system 7 is also called simply the client.

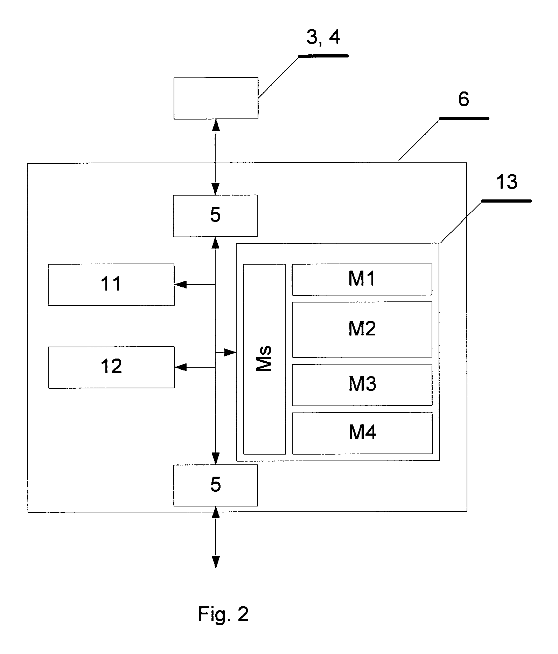

The data transmission device 6 is shown in fig. 2. The device contains any I/O port 5 implementing a network connection, a central processor CPU 11, a mass storage 12 and a primary storage 13. In the primary storage 13, in addition to a standard M5 module ensuring the proper operation of the device and containing the operating system, drivers for the I/O devices etc., the following modules are located: M1 - a sensor servicing module with a list of signals from wireless sensors A, M2 - a mapping module with a mapping table B and with a list of signals C available for the client 7 C, M3 - a module for dynamically linking signals with the list of links D, and M4 - a subscription servicing module with the subscription list E.

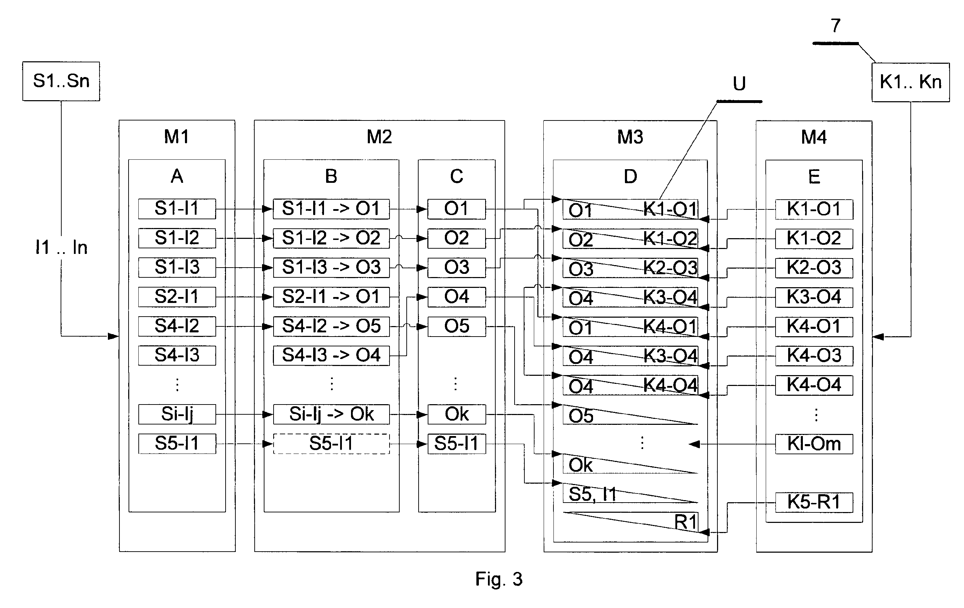

As shown in fig. 3, the module M1 is supplied output signals, marked I1..In, from each of the sensors S1..Sn. Each sensor, marked by the ID S1..Sn and each signal marked by the ID I1..In corresponds to specific pairs of input signals Si-Ij, e.g. S1-I1; S1-I2: S1-I3; S2-I1, S4-I2; S4-I3, S5-I1, and the set of these pairs forms the list of sensor signals A. Thus defined input signals from the list of sensor signals A are stored in the module M1 as the IDs of input signals. The list A is sent to the module M2 in which there is generated the list of signals C available for the client 7 in accordance with the mapping table B. The mapping table B consists of juxtaposed pairs of IDs of input signals Si-Ij and the corresponding IDs of the signals available for the client O1...Ok., forming a pair of IDs in the form (Si-Ij, Ok). Each such ID pair means that an Si-Ij signal is exchanged for an Ok signal. The mapping table B is configured by the user who operates the data collection system 7, by entering the pairs of the elements (Si-Ij, Ok.) into the memory of the device 6. The mapping table B can be changed during the operation of the system. The mapping table B can also be generated automatically by the data transmission device 6 from additional information originating in the wireless sensor network. Mapping takes place by searching the mapping table B and finding the element containing the sensor ID and the sensor signal ID and the corresponding ID of the signal available for the client in the form of O1..Ok. Each such assignment of IDs is stored in the mapping table B in the module M2.

If the matching entry is not found in the mapping table B, the input signal ID is not changed. However, information about the lack of entry for the input signal is stored in the module M2 as a temporary entry in the mapping table B. For example, a new output signal from a sensor S5, called S5-I1, does not have a corresponding position in the mapping table B in the module M2, therefore it remains with unchanged ID on the list of signals C. The generated list of signals C is delivered to the dynamic signal linking module M3 in order to create the list of links D consisting of the pairs: the ID of the signal available for the client and the subscription ID collected from the subscription list E. The list of subscription signals E consists of the following pairs: the ID of subscriptions opened from the client's ID, Ki, and the ID of the requested signal Oj, and it is delivered to the module M4 from the data collection system 7 and then delivered to the module M3. The list of subscription signals E is generated in the module M4 which is responsible for subscription servicing. A client with an ID: K1..Kn, when connecting to the device 6 indicates - once or many times - which signals available for the client it wants to receive, e.g. O1..Om, R1. Each such request causes the emergence of a subscription element or elements on the list of subscription signals E, e.g. K1-O1, K1-02, K2-O3, K3-O4, K4-O1, K4-O3, K4-O4, K5-R1. The function of the module M3 is to dynamically link the elements from the list C with the elements of the list of subscription signals E. The linking takes place for each element from the list E by collecting the ID of the requested signal, for example, for the pair K1-O1 it would be O1, and finding it on the list of available signals C. If such signal is found, the pair: the ID of the signal available from the list C and the subscription ID from the list E, is stored in the list of links D in the module M3 and a communications channel U providing a bi-directional transfer of information is created. In the event that the ID of the requested subscription signal is not found on the list of available signals C, for example, subscription ID K5-R1, the communications channel U is not created, but the ID of the subscription signals is not removed from the list E. The list of links D is generated each time any signal appears on or is removed from the list of enabled signals C and/or the list of subscription signals E. Removal of any subscription element from the list of subscription signals E occurs when the data collection system 7 has terminated the connection with the data transmission device 6.

The client, having connected to the device 6, has an opportunity to collect the list of available signals C.

The inventive method is implemented as follows.

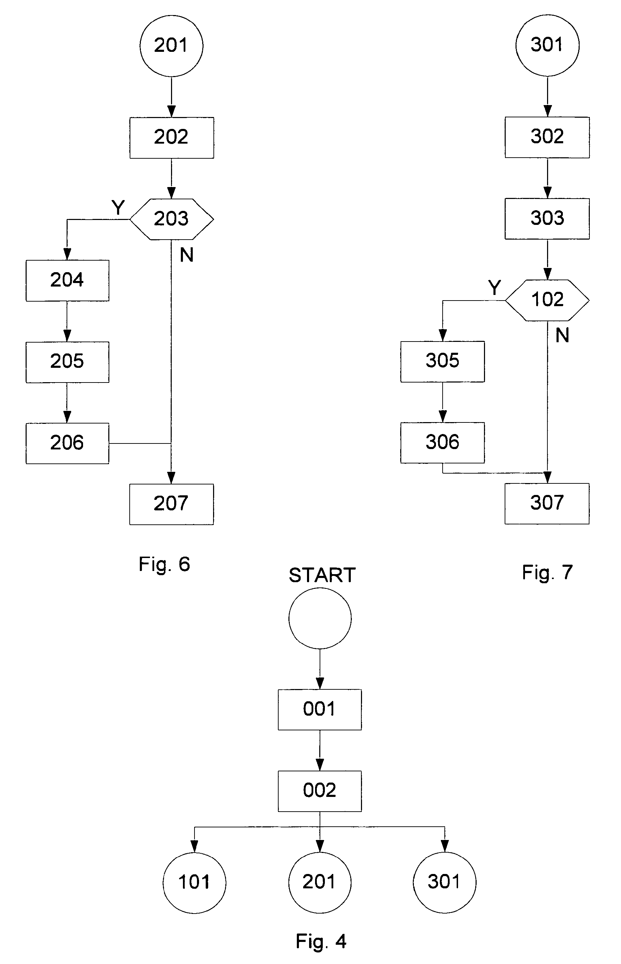

In operation 001, in the data transmission device 6 ( fig.4), the sent signal is received and then in operation 002 the source of the received signal is checked, i.e. it is checked if the received signal originates in the sensor network or if the received signal originates in the data collection system 7, and it either concerns information sent to a specific sensor of the sensor network or the client's request for the establishment of subscription. During the identification of the received signal source, the sequence in which the signals are received is of no significance and it may be random. For example, if the received signal originates in the sensor network 1 or 2, then operation 101 is performed, and if not, then it is checked if the received signal originates in the data collection system 7 and if it refers to information sent to a specific sensor in the sensor network. If it is confirmed that the signal originates in this system 7, operation 201 is performed. For a case where the signal originates in the data collection system 7 and refers to the client's request for the establishment of subscription, operation 301 is performed.

The signal source identification can be based, for example, on the number of the I/O port 5 from which data are collected, or on the basis of the communications channel U of one or many I/Os of the device 6.

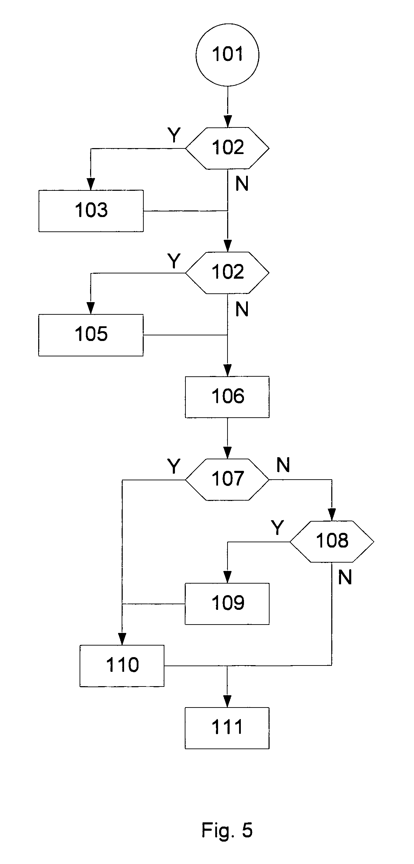

After checking the source of the signal, for a case where the received signal originates in the sensor network 1 or 2 (fig.5), this signal is intercepted in the sensor servicing module M1 and stored as an item on the list of sensor signals A in operation 101.

In operation 102, it is checked in the mapping module M2 whether there is a map element in the mapping table B for the signal received from the sensor network. If such element exists (in the drawing, a positive answer is marked Y for Yes and a negative answer is marked N for No), then in operation 103 in the module M2 the ID of the received signal is changed according to the IDs placed in the mapping table and then operation 104 is carried out. If there is no element of the map for the signal received from the sensor network, operation 104 is performed immediately. The operation 104 consists in checking in module M3 if the received signal exists on the list of signals C available for the client. If yes, operation 106 is performed, if no, in operation 105 a new element of the list of signals C available for the client is generated, and in operation 106 the new connection with the signal is stored. Next, in operation 107, it is checked if for the received signal from operation 106 at least one communications channel U exists in the module U3 related to the client's subscription Ki. If such channel exists, then information about the signal is automatically sent to the data collection system in operation 110. If there is no communications channel U of connection with the signal, in operation 108 it is checked if for the given signal there is at least one subscription element on the list E. If no client is waiting for subscription, operation 111 follows. Otherwise, for each subscription to a signal not related to a communications channel a new communications channel is created in operation 109, and in operation 110 the signal is sent to all clients waiting for that signal. Then one moves on to operation 111 in which one waits for the next signal, for which all operations from 101 to 110 are repeated or operations 201 or 301 are performed.

For a case, where the received signal originates in the data collection system 7 and applies to information sent to a specific sensor from the sensor network in operation 201 (fig. 6) in the module M4 this signal is received and through the corresponding channel U from the module M3 in operation 202 it is bound with the element of the list of signals C available for the client. Next, in operation 203 in the module M2 it is checked if there is an element of the map in the mapping table B for the received signal from the collection system 7. If such element exists in the mapping table B, operation 207 is performed. If such element does not exist in the mapping table B, the ID assigned to that signal in operation 204 in module M2 is collected and in the next operation 205 a reverse mapping is performed for the received signal to obtain a signal freed from mapping. Next in operation 206 the signal freed from mapping is sent to the module M1 and from there to the indicated sensor from the sensor network, whereupon the next signal is awaited in operation 207, for which all operations from 201 to 206 are repeated or operations 101 or 301 are performed.

For a case where the received signal comes from the collection system 7 and concerns the client's request for the establishment of subscription, in operation 301 (fig. 3) in module M4 the signal is received and in operation 302 the subscription confirmation is sent to the data collection system 7.

Then in operation 303 the subscription is recorded on the subscription list E in module M4. Next, in operation 304 it is checked if the requested signal exists on the list of signals available for the client C. If such element exists, operation 307 is performed. If such element does not exist then in module M3 in operation 305 the communications channel U is created and in operation 306 current data are sent to the data collection system 7 and then in operation 307 the next signal is awaited for which all operations from 301 to 306 are repeated or operations 101 or 201 are performed.

## Claims

1. A method of data transmission between at least one network of wireless sensors (1, 2) and at least one computer-based data collection system (7), in which signals from individual wireless sensors (S1-Sn, T1-Tn) are sent to the computer-based data collection system (7), **characterised in that** signals from individual wireless sensors (S1-Sn, T1-Tn) are sent to the computer-based data collection system (7) by means of a data transmission device (6) in which at least one communications channel (U) is dynamically generated for a bi-directional transfer of information between a signal or signals supplied from the network of wireless sensors (1,2) and signals coming from the data collection system (7).

2. A method according to claim 1, **characterised in that** the communications channel (U) is generated by creating a list of links (D) containing interconnected elements of a list of signals (C) available for the data collection system (7) and elements of a list of subscription signals (E).

3. A method according to claim 2, **characterised in that** the list of signals (C) available for the data collection system (7) is generated in two stages, first by creating a list of input signals (A) from the delivered signals coming from the wireless sensors (S1-Sn, T1-Tn), which is then mapped into the list of signals (C) available for the data collection system through a mapping table (B) in which the key to finding the right signal available for the data collection system is the ID of the sensor and/or the ID of the input signal.

4. A method according to claim 2 or 3, **characterised in that** the list of subscription signals (E) is generated from signals originating in the data collection system (7), which are expressed in the form of the client's requests.

5. A method according to claim 1, **characterised in that** the signals from individual wireless sensors (S1-Sn, T1-Tn) are received first in base stations (3, 4) and then the received signals are transmitted to the computer-based data collection system (7) through the data transmission device (6).

6. A method according to claim 1, **characterised in that** the data transmission device (6) communicates with the collection system (7) through a communications module in the form of a network card, an RS232 port, Ethernet or other communications link.

7. A method according to claim 1-6 **characterised in that** communication between the data transmission device (6) and the data collection system (7) takes place through the OPC protocol.

8. A device for the implementation of the method according to clam 1-7 **characterised in that** it contains:
• a module for dynamically linking signals (M3) in which a communications channel (U) is generated for bi-directional transfer of information between signals supplied from the wireless sensor network (1, 2) and signals originating in the data collection system (7) in the form of a list of links (D) containing interconnected elements of the list of signals (C) available for the data collection system (7) and the elements of the list of subscription signals (E),
• a mapping module (M2) for generating the list of signals available for the data collection system,
• a subscription servicing module (M4) for generating the list of subscription signals (E),
• a sensor servicing module (M1) for generating a list of wireless sensor signals (A).

9. A device according to claim 8 **characterised in that** is forms an integral part with the data collection system (7).

10. A computer program for data transmission between at least one wireless sensor network and at least one computer-based data collection system, which is loadable to and executable in the data transmission device (6), **characterised in that** during execution it implements the method according to claims 1-7.
